# EUROPEAN PATENT SPECIFICATION

(11) **EP 3 135 907 B1**
(45) Date of publication and mention of the grant of the patent: **25.03.2020**
(21) Application number: 16157109.6
(22) Date of filing: 24.02.2016
(51) Int. Cl.: F04B 7/00, F04B 1/06, F04B 1/053, F04B 49/06, F04B 49/24, F03C 1/04, F03C 1/053, F03D 15/00, F03D 9/28

(54) **HYDRAULIC MACHINE, METHOD OF OPERATING THE SAME, AND POWER GENERATING APPARATUS OF RENEWABLE-ENERGY TYPE**
HYDRAULISCHE MASCHINE, VERFAHREN ZUM BETRIEB DERSELBEN UND STROMERZEUGUNGSVORRICHTUNG VOM TYP DER ERNEUERBAREN ENERGIEN
MACHINE HYDRAULIQUE, SON PROCÉDÉ DE FONCTIONNEMENT ET APPAREIL DE GÉNÉRATION DE PUISSANCE DE TYPE À ÉNERGIE RENOUVELABLE

(30) Priority: 27.08.2015 JP 2015168213
(43) Date of publication of application: 01.03.2017
(73) Proprietor: Mitsubishi Heavy Industries, Ltd., Tokyo 108-8215 (JP); Artemis Intelligent Power Limited, Loanhead EH20 9TB (GB)
(72) Inventor: Hayashi, Kentaro, Tokyo, 108-8215 (JP); Ohira, Takeo, Tokyo, 108-8215 (JP); Nakano, Takahiro, Tokyo, 108-8215 (JP); Dumnov, Daniil, Lothian, Lothian EH20 9TB (GB); Abrahams, Daniel, Lothian, Lothian EH20 9TB (GB); Caldwell, Niall, Lothian, Lothian EH20 9TB (GB)
(74) Representative: Henkel & Partner mbB

(56) References cited:
- EP-A1- 2 851 562
- EP-A1- 2 895 742
- WO-A2-2011/104548
- US-A1- 2010 032 959

## Description

### TECHNICAL FIELD

The present disclosure relates to a hydraulic machine, a method of operating the same, and a power generating apparatus of renewable-energy type.

### BACKGROUND ART

Generally, as a hydraulic machine such as a hydraulic pump and a hydraulic motor, known is a configuration in which a plurality of cylinders and pistons is disposed around a rotation shaft. For instance, US 2010/0032959 A discloses a hydraulic transmission including a hydraulic pump driven by rotation of a rotation shaft, a hydraulic motor connected to a generator, and a hydraulic line disposed between the hydraulic pump and the hydraulic motor.

In a hydraulic transmission of such type, the hydraulic pump includes a plurality of sets of pistons and cylinders, a cam rotated by the pistons cyclically reciprocating in the cylinders, and high-pressure valves and low-pressure valves opened and closed in accordance with the timing of the reciprocating motion of the pistons. Further, the opening and closing of the high-pressure valves and the low-pressure valves determine whether working chambers surrounded by the cylinders and the pistons are in an active state or in a non-active state, thereby changing the displacement of the hydraulic motor.

WO 2011/104548 A2 discloses a fluid-working machine and method of operating a fluid-working machine on which the preamble portion of claim 1 and claim 11 is based, respectively, and in this connection the document is particularly directed to a method of detecting a fault in a fluid-working machine comprising a plurality of working chambers of cyclically varying volume, each of the working chambers being operable to displace a volume of working fluid which is selectable for each cycle of working chamber volume to carry out the working function responsive to a received demand signal. An unacceptable fault or malfunction in the fluid-working machine is detected if it causes one or more measured output parameters of the fluid working machine which are responsive on the displacement of working fluid by one or more of the working chambers to respond in a way which would not be expected if the fluid-working machine was functioning acceptable.

### SUMMARY

Meanwhile, the hydraulic machine disclosed in US 2010/0032959 A has an advantage of being capable to continue operation even if there is a trouble in a part of the cylinders, because the hydraulic machine includes a plurality of cylinders. A trouble of a cylinder includes, for instance, a trouble of a component corresponding to the cylinder, such as an operation failure of a high-pressure valve or a low-pressure valve, or abnormality of a piston.

However, if there is a trouble in a part of the plurality of cylinders, while it is possible to continue operation of the hydraulic machine, a torque fluctuation of a rotation shaft may increase, which may generate an oscillation component related to the rotation speed of the hydraulic machine. When oscillation occurs in a hydraulic machine, the oscillation may affect the fatigue strength of the rotation shaft and may bring about serious malfunction of the hydraulic machine. Further, noise increases in accordance with the occurrence of oscillation of the hydraulic machine. Thus, even if the trouble is occurring in only a part of the plurality of cylinders, it is required to suppress occurrence of oscillation in the hydraulic machine.

In this regard, US 2010/0032959 A does not disclose any specific configuration for suppressing generation of oscillation in a hydraulic machine in a case where there is a trouble in a part of a plurality of cylinders.

In view of this, an object of the present invention is to provide a hydraulic machine, a method of operating the same, and a power generating apparatus of renewable-energy type, whereby it is possible to suppress generation of oscillation even if there is a trouble in a part of a plurality of cylinders.
(1) A hydraulic machine according to the present invention comprises the features of claim 1 including: a rotation shaft; a plurality of pistons configured to reciprocate in a period corresponding to a single rotation of the rotation shaft, the plurality of pistons including pistons reciprocating along with the rotation of the rotation shaft at time phases varied among the pistons; a plurality of cylinders forming a plurality of working chambers with the plurality of pistons; a state-switch unit for switching a state of each of the working chambers between an active state in which energy is converted between rotation energy of the rotation shaft and pressure energy in the working chamber and a non-active state in which the energy is not converted; and a controller for controlling the state-switch unit. The controller is configured to fix a state of at least one of the plurality of working chambers to the non-active state, the at least one working chamber corresponding to a time phase different from the time phase of reciprocation of the piston of an abnormal working chamber with a malfunction, or to reduce a frequency of switching the state of the at least one working chamber to the active state.
   If a trouble occurs in a part of the plurality of cylinders of the hydraulic machine to cause malfunction of some of the plurality of working chambers, the working chamber (abnormal working chamber) fails to perform work and may generate a torque fluctuation of the rotation shaft. For instance, in a hydraulic motor, a force is applied from the pistons to the rotation shaft in a motoring stroke in which each piston moves from a top dead center to a bottom dead center. If malfunction occurs in some of the working chambers, the force applied to the rotation shaft may lose its balance and cause a torque fluctuation at a timing corresponding to the rotation cycle. An example of a trouble of a cylinder includes a trouble of a component corresponding to the cylinder, such as an operation failure of a high-pressure valve or a low-pressure valve or abnormality of a piston, for instance.
   In view of this, as in the above configuration (1), the target working chamber having a time phase of reciprocating motion of the piston varied from that of the abnormal working chamber is fixed to the non-active state, or the frequency of switching the state of the target working chamber to the active state is reduced, so that the working chamber having a time phase varied from that of the abnormal working chamber does not perform work as well, or performs work less frequently. In this way, it is possible to suppress a torque fluctuation due to the abnormal working chamber even if there is a trouble in a part of the cylinders. Thus, it is possible to average the torque in operation of the hydraulic machine, which enables operation of the hydraulic machine with reduced oscillation and reduced noise.
(2) Preferably, in the above configuration (1), the controller is configured to fix a state of as many working chamber as the abnormal working chamber to the non-active state, the as many working chamber corresponding to the piston reciprocating at a phase opposite to that of the abnormal working chamber in terms of time.
   In the present specification, the working chamber at an "opposite phase" to the abnormal working chamber refers to a working chamber having a time phase varied by 180° from that of the abnormal working chamber, or a working chamber having a time phase closest to the time phase varied by 180°.
   According to the above configuration (2), a working chamber corresponding to a phase opposite to that of the abnormal working chamber is fixed to the non-active state. As a result, not only the abnormal working chamber but also the working chamber having the opposite phase from that of the abnormal working chamber no longer performs work, which makes it possible to suppress a torque fluctuation of the rotation shaft due to the abnormal working chamber effectively.
(3) Preferably, in the above configuration (1) or (2), the controller is configured to: if all of the working chambers are normal, at a plurality of decision points which is set for the respective time phases in the period corresponding to the single rotation of the rotation shaft, determine whether to operate the working chambers corresponding to the respective decision points in the active state; and, if a part of the working chambers has the malfunction, at only an effective decision point which is the plurality of decision points excluding: a decision point corresponding to the time phase of reciprocation of the piston of the abnormal working chamber; and at least one decision point which is not the decision point corresponding to the abnormal working chamber, determine whether to operate the working chamber corresponding to the effective decision point in the active state.
   With the above configuration (3), excluding the decision point of the working chamber having the same phase as that of the abnormal working chamber makes it possible to prevent the working chamber corresponding to the decision point next to that of the abnormal working chamber from being in the active state too frequently. In this way, it is possible to suppress 1N-component oscillation (oscillation of a frequency component corresponding to the rotation speed of the rotation shaft) of the hydraulic machine caused by the active frequency of the working chamber corresponding to the decision point next to that of the abnormal working chamber being higher than that of other working chambers. Further, in addition to the decision point of the working chamber at the same phase as the abnormal working chamber, at least one decision point other than the decision point is excluded. In this way, it is possible to average the torque in operation of the hydraulic machine, which makes it possible to suppress oscillation of the hydraulic machine more effectively.
(4) Preferably, in the above configuration (3), the effective decision point is the plurality of decision points excluding: the decision point corresponding to the time phase of reciprocation of the piston of the abnormal working chamber; and a decision point having a phase opposite to that of the decision point corresponding to the abnormal working chamber in terms of time.
   With the above configuration (4), it is possible to reduce mainly the oscillation of IN component of the hydraulic machine effectively.
(5) Preferably, in the above configuration (3), the effective decision point is the plurality of decision points excluding: the decision point corresponding to the time phase of reciprocation of the piston of the abnormal working chamber; and two decision points each of which is varied by a phase angle of 120 degrees from the decision point corresponding to the abnormal working chamber.
   With the above configuration (4), it is possible to reduce mainly the oscillation of 2N component of the hydraulic machine effectively.
(6) Preferably, in the above configurations (3) to (5), the controller is configured to: if all of the working chambers are normal, add an active frequency command value Fd every time one of the plurality of decision points comes, determine whether a cumulative value of the active frequency command values Fd is a threshold value or more at each of the decision points, and switch the state of the working chamber corresponding to a decision point at which the cumulative value is the threshold value or more to the active state; and, if a part of the working chambers has the malfunction, add an active frequency command value Fd every time one of the effective decision points comes, determine whether a cumulative value of the active frequency command values Fd is a threshold value or more at each of the effective decision points, and switch the state of the working chamber corresponding to an effective decision point at which the cumulative value is the threshold value or more to the active state.
   In the above configuration (6), if all of the working chambers are normal, the active frequency command value Fd is added up every time each decision point comes. Then, the state of the working chamber corresponding to the decision point at which the cumulative value is at least the threshold value is switched to the active state. On the other hand, the state of the working chamber corresponding to the decision point at which the cumulative value is the threshold or less is switched to the non-active state. Performing such a control makes it possible to determine the working chambers to be in the active state in accordance with the active frequency command value Fd. However, with the above control alone, the working chamber corresponding to the decision point next to that of the abnormal working chamber with malfunction may enter the active state too frequently when malfunction has occurred in a part of the working chambers.
   In view of this, in the above configuration (6), if there is malfunction in a part of the working chambers, the active frequency command value Fd is added up every time each effective decision point comes.
   Specifically, when selecting the working chamber to be in the active state, decision points other than the effective decision points are excluded, and the working chamber to be in the active state is selected only at the effective decision points. Thus, it is possible to suppress a torque fluctuation due to the abnormal working chamber. As a result, it is possible to average the torque in operation of the hydraulic machine, which enables operation of the hydraulic machine with reduced oscillation and reduced noise.
(7) Preferably, in the above configuration (1) or (2), the controller is configured to: if all of the working chambers are normal, at a plurality of decision points which is set for the respective time phases in the period corresponding to the single rotation of the rotation shaft, determine whether to operate the working chambers corresponding to the respective decision points in the active state under the same determination condition; and, if a part of the working chambers has the malfunction, at the decision points in a first group including the decision point corresponding to the time phase of reciprocation of the piston of the abnormal working chamber, determine whether to operate the working chambers corresponding to the respective decision points in the first group in the active state, under a strict determination condition as compared to the decision points in a second group which are not the decision points in the first group.
   In this way, the state of the working chambers corresponding to the decision points of the first group is switched to the active state less frequently than the working chambers corresponding to the decision points of the second group. Thus, during low-load operation of the hydraulic machine in which the ratio the working chambers to be in the active state is low, most of the working chambers corresponding to the decision points of the first group do not enter the active state, but the working chambers corresponding to the decision points of the second group enter the active state almost exclusively. In other words, the decision points of the first group are substantially excluded. Thus, the decision points of the working chambers at the same phase as that of the abnormal working chamber are substantially excluded, which makes it possible to prevent the working chambers corresponding to the decision points of the second group, the working chambers being next to the abnormal working chamber, from entering the active state too frequently. In this way, it is possible to suppress oscillation (oscillation of a frequency component corresponding to the rotation speed of the rotation shaft) of the hydraulic machine caused by the active frequency of the working chambers corresponding to the decision points of the second group next to the abnormal working chamber being higher than the working chambers corresponding to the other decision points of the second group, the working chambers being next to the abnormal working chambers.
(8) Preferably, in the above configuration (7), the controller is configured to: if all of the working chambers are normal, add an active frequency command value Fd every time one of the plurality of decision points comes, determine whether a cumulative value of the active frequency command values Fd is a common threshold value or more at each of the decision points, and switch the state of the working chamber corresponding to a decision point at which the cumulative value is the common threshold value or more to the active state; and, if a part of the working chambers has the malfunction, switch the state of the working chamber corresponding to a decision point of the first group at which the cumulative value is a first threshold value or more to the active state, and switch the state of the working chamber corresponding to a decision point of the second group at which the cumulative value is a second threshold value or more to the active state, the second threshold value being smaller than the first threshold value.
   In the above configuration (8), if all of the working chambers are normal, the active frequency command value Fd is added up every time each decision point comes. Then, the state of the working chamber corresponding to the decision point at which the cumulative value is at least the threshold value is switched to the active state. On the other hand, the state of the working chamber corresponding to the decision point at which the cumulative value is the threshold or less is switched to the non-active state. Performing such a control makes it possible to determine the working chambers to be in the active state in accordance with the active frequency command value Fd. However, with the above control alone, the working chamber corresponding to the decision point next to that of the abnormal working chamber with malfunction may enter the active state too frequently when malfunction has occurred in a part of the working chambers.
   In view of this, in the above configuration (8), if there is malfunction in a part of the working chambers, the first threshold value is used at the decision points of the first group corresponding to the abnormal working chamber, and the second threshold value smaller than the first threshold value is used at the decision points of the second group (which are not the decision points belonging to the first group). In this way, the active frequency of the working chambers corresponding to the decision points of the second group, the working chambers being next to the abnormal working chamber, becomes higher than that of the working chambers corresponding to the other decision points of the second group, which makes it possible to suppress oscillation of the hydraulic machine appropriately.
(12) Preferably, in the above configurations (1) to (8), the state-switching unit includes: a high-pressure valve for switching a communication state between a high pressure line and each of the working chambers; a low-pressure valve for switching a communication state between a low pressure line and each of the working chambers. For the working chamber in the active state, the high-pressure valve and the low-pressure valve are opened and closed in accordance with the phase of reciprocation of the piston. For the working chamber in the non-active state, a state in which the high-pressure valve is closed and the low-pressure valve is open is maintained, regardless of the phase of reciprocation of the piston.
(13) A renewable energy power generating apparatus comprises: a rotor configured to be rotatable by renewable energy; a hydraulic pump configured to be driven by the rotor to generate pressurized oil; a hydraulic motor configured to be driven by the pressurized oil; and a generator configured to be driven by the hydraulic motor. At least one of the hydraulic pump or the hydraulic motor comprises the hydraulic machine according to the invention.
(14) A method of operating a hydraulic machine according to the present invention has the features of claim 11 and is for a hydraulic machine comprising: a rotation shaft; a plurality of pistons configured to reciprocate in a period corresponding to a single rotation of the rotation shaft, the plurality of pistons including pistons reciprocating along with the rotation of the rotation shaft at time phases varied among the pistons; a plurality of cylinders forming a plurality of working chambers with the plurality of pistons; and a state-switch unit for switching a state of each of the working chambers between an active state in which energy is converted between rotation energy of the rotation shaft and pressure energy in the working chamber and a non-active state in which the energy is not converted. The method comprises fixing a state of at least one of the plurality of working chambers to the non-active state, the at least one working chamber corresponding to a time phase which is different from the time phase of reciprocation of the piston of an abnormal working chamber with a malfunction, or reducing a frequency of switching the state of the at least one working chamber to the active state.

According to the above method (14), the target working chamber having a time phase of reciprocating motion of the piston varied from that of the abnormal working chamber is fixed to the non-active state, or the frequency of switching the state of the target working chamber to the active state is reduced, so that the working chamber having a time phase different from that of the abnormal working chamber does not perform work as well, or performs work less frequently. In this way, it is possible to suppress a torque fluctuation due to the abnormal working chamber even if there is a trouble in a part of the cylinders. Thus, it is possible to average the torque in operation of the hydraulic machine, which enables operation of the hydraulic machine with reduced oscillation and reduced noise.

According to the present invention, it is possible to suppress a torque fluctuation due to an abnormal working chamber in which malfunction has occurred. Thus, it is possible to average the torque in operation of the hydraulic machine, which enables operation of the hydraulic machine with reduced oscillation and reduced noise.

### BRIEF DESCRIPTION OF DRAWINGS

FIG. 1 is a configuration diagram of a wind turbine power generating apparatus according to some embodiments.
FIG. 2 is a cross-sectional view of a hydraulic motor according to one embodiment, taken along a direction perpendicular to the rotation shaft.
FIG. 3 is a cross-sectional view of a hydraulic motor according to one embodiment, taken along the rotation shaft.
FIGs. 4A and 4B are each a schematic diagram illustrating the arrangement of working cylinders and disabled cylinders in the hydraulic motor. FIG. 4A illustrates the arrangement at the time when there is an abnormal working chamber, and FIG. 4B illustrates the arrangement at the time when a working chamber corresponding to the abnormal working chamber is disabled.
FIG. 5A is a graph showing torques applied to the rotation shaft from respective cylinders during normal operation and the total torque of all cylinders over the time phase.
FIG. 5B is a graph showing torques applied to the rotation shaft from respective cylinders when there is abnormality and the total torque of all cylinders over the time phase.
FIG. 5C is a graph showing torques applied to the rotation shaft from respective cylinders during operation for addressing abnormality and the total torque of all cylinders over the time phase.
FIG. 6 is a graph showing a torque fluctuation over the time phase for each oscillation component.
FIG. 7 is a diagram for explaining the setting procedure of non-active working chambers based on an active frequency command value Fd according to one embodiment.
FIGs. 8A and 8B are each a schematic diagram illustrating the arrangement example of cylinders (working chambers) to be excluded from decision points. FIG. 8A illustrates a case where no decision point is excluded, FIG. 8B illustrates a case where one decision point is excluded, and FIG. 8C illustrates a case two decision points are excluded.
FIGs. 9A to 9C are each a diagram illustrating the relationship between an oscillation frequency of the hydraulic motor and the active frequency command value Fd. FIG. 9A illustrates an analysis result in a case where no decision point is excluded. FIG. 9B illustrates an analysis result in a case where two decision points are excluded. FIG. 9C illustrates an analysis result in a case where three decision points are excluded.
FIG. 10 is a diagram for explaining the setting procedure of non-active working chambers based on an active frequency command value Fd according to another embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

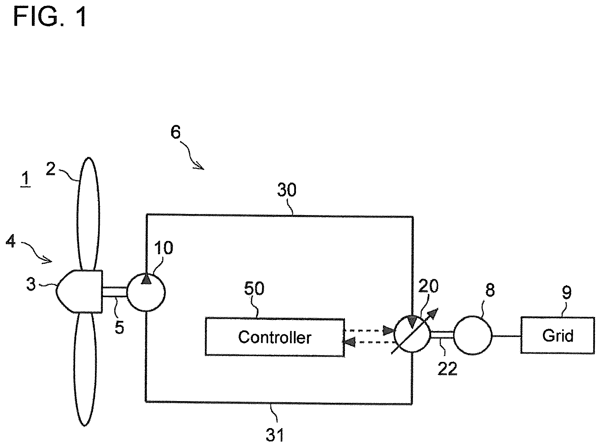

Firstly, with reference to FIG. 1, a wind turbine power generating apparatus 1 will be described as a power generating apparatus of renewable-energy type to which the present embodiment is applied. FIG. 1 is a schematic configuration diagram of a wind turbine power generating apparatus 1 according to some embodiments. However, the power generating apparatus of renewable-energy type according to the present embodiment can be applied to other power generating apparatuses of renewable-energy type such as a tidal current generator, an ocean current generator, and a river current generator.

As illustrated in FIG. 1, the wind turbine power generating apparatus 1 according to some embodiments includes a rotor 4 including at least one blade 2 and a hub 3, a rotation shaft 5 which rotates along with the rotor 4, a hydraulic transmission 6 which increases the rotation speed of the rotor 4, and a generator 8 to which rotational energy of the rotor 4 is inputted via the hydraulic transmission 6.

The rotor 4 is configured such that the at least one blade 2 is mounted to the hub 3, so that the at least one blade 2 rotates together with the hub 3 by receiving wind. The rotation shaft (main shaft) 5 is connected to the hub 3. The entire rotor 4 rotates by the force of wind received by the at least one blade 2, and the rotation is inputted to the hydraulic transmission 6 via the rotation shaft 5.

The hydraulic transmission 6 includes a hydraulic pump 10, at least one hydraulic motor 20, and a hydraulic line including a high-pressure line 30 and a low-pressure line 31.

The hydraulic pump 10 is configured to be driven by mechanical rotational energy inputted into the rotation shaft 5.

The hydraulic motor 20 is configured to be driven by pressurized oil (high-pressure oil) from the hydraulic pump 10. The generator 8 connected to a grid 9 is coupled to a rotatable shaft (output shaft) 22 of the hydraulic motor 20.

The high-pressure line 30 is disposed between an outlet of the hydraulic pump 10 and an inlet of the hydraulic motor 20 and configured to guide high-pressure oil produced in the hydraulic pump 10 to the hydraulic motor 20.

The low-pressure line 31 is disposed between an outlet of the hydraulic motor 20 and an inlet of the hydraulic pump 10 and configured to guide working oil (low-pressure oil) discharged from the hydraulic motor 20 to the hydraulic pump 10.

In the above hydraulic transmission 6, the high-pressure oil produced by the hydraulic pump 10 flows into the hydraulic motor 20 via the high-pressure line 30 and drives the hydraulic motor 20. The low-pressure oil having performed work in the hydraulic motor 20 flows into the hydraulic pump 10 via the low-pressure line 31, is pressurized by the hydraulic pump 10, and flows again into the hydraulic motor 20 via the high-pressure line 30. Rotation inputted into the hydraulic pump 10 of the hydraulic transmission 6 has its speed increased by the hydraulic transmission 6 and is inputted to the generator 8.

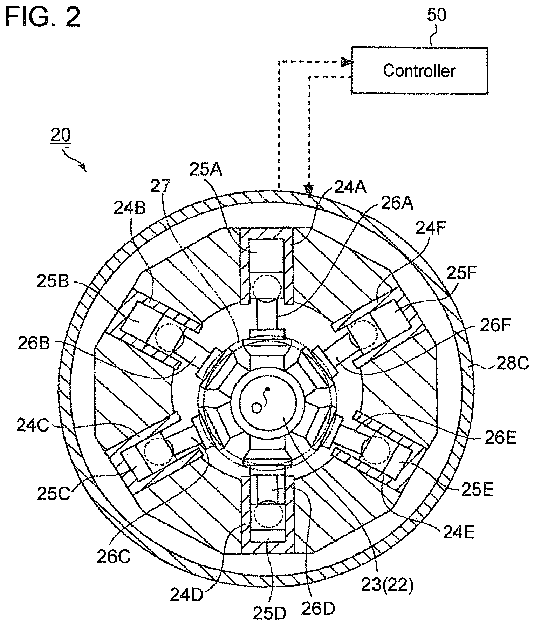

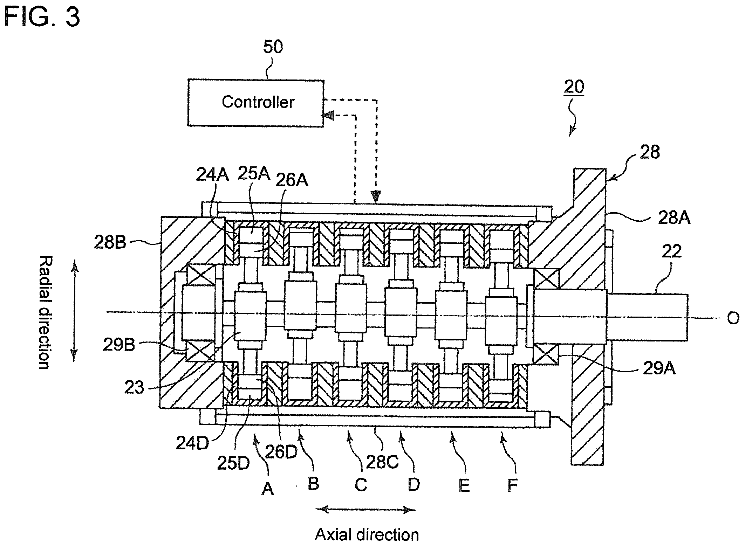

Now, as an example of a hydraulic machine in the present embodiment, the hydraulic motor 20 illustrated in FIGs. 2 and 3 will be described specifically. FIG. 2 is a cross-sectional view of the hydraulic motor 20 according to one embodiment, taken along a direction perpendicular to the rotational axis O of the rotation shaft 22, and FIG. 3 is a cross-sectional view of the hydraulic motor 20 according to one embodiment, taken along the rotational axis O of the rotation shaft 22.

As illustrated in FIGs. 2 and 3, the hydraulic motor 20 according to one embodiment includes an eccentric cam 23 configured to rotate with the rotation shaft 22, a plurality of pistons 26 (26A to 26F), and a plurality of cylinders 24 (24A to 24F). The pistons 26 and the cylinders 24 form respective working chambers 25 (25A to 25F). The high-pressure line 30 and the low-pressure line 31 are connected to each of the working chambers 25 (see FIG. 1), and thereby the working oil, which is a working fluid, is supplied and discharged via a state-switch unit (not illustrated).

Each of the plurality of pistons 26 and the plurality of cylinders 24 is disposed in a radial fashion around the eccentric cam 23. The pistons 26 are caused to reciprocate at phases varied from one another by the working oil in the working chambers 25 and the eccentric cam 23. Specifically, when each of the pistons 26 moves from the top dead center toward the bottom dead center (motoring stroke), the working oil introduced from the high-pressure line 30 (see FIG. 1) to corresponding one of the working chambers 25 pushes each of the pistons 26 along the cylinder axis downward toward the eccentric cam 23. At this time, the eccentric cam 23 is pressed by the pistons 26, and thereby the eccentric cam 23 rotates. When the eccentric cam 23 rotates, the pistons 26 positioned in the vicinity of the bottom dead center are pushed up by the eccentric cam 23, so that the working oil in the working chambers 25 is discharged to the low-pressure line 31 (see FIG. 1).

The cyclic reciprocating motion of the pistons 26 causes the rotation shaft 22 connected to the eccentric cam 23 to rotate.

The rotation shaft 22 may be connected to the generator 8 illustrated in FIG. 1, for instance, and configured to transmit the rotational motion of the rotation shaft 22 to the generator to drive the generator 8.

The casing 28 includes, for instance as illustrated in FIGs. 2 and 3, end plates 28A, 28B disposed on the opposite ends of the hydraulic motor 20 in the axial direction, and a tubular case 28C disposed between the end plates 28A and 28B. To the casing 28, the oscillation of the rotation shaft 22 propagates via bearings 29A, 29B supporting the rotation shaft 22.

As illustrated in FIG. 3, the hydraulic motor 20 may include a plurality of banks A to F each including the eccentric cam 23, and the plurality of pistons 26 (26A to 26F), the plurality of cylinders 24 (24A to 24F), and the plurality of working chambers 25 (25A to 25F) corresponding to the eccentric cam 23.

The above hydraulic motor 20 further includes a state-switch unit configured to switch a state of each working chamber 25 (25A to 25F) between an active state in which energy conversion is performed between rotation energy of the rotation shaft 22 and pressure energy in the working chamber 25 (25A to 25F), and a non-active state in which the energy conversion is not performed.

For instance, the state-switch unit includes the high-pressure valve and the low-pressure valve (not illustrated) provided for each working chamber 25 (25A to 25F). The high pressure valve is configured to switch the communication state between each working chamber 25 (25A to 25F) and the high-pressure line 30. The low pressure valve is configured to switch the communication state between each working chamber 25 (25A to 25F) and the low-pressure line 31.

Specifically, the hydraulic motor 20 according to one embodiment is capable of switching the state of each working chamber 25 (25 to 25F) between the active state and the non-active state by opening and closing the high-pressure valve and the low-pressure valve. If the working chamber 25 (25A to 25F) is in the active state, the high pressure valve is opened and the low-pressure valve is closed during the motoring stroke to cause pressurized oil to flow into the working chamber 25 (25A to 25F) from the high-pressure line 30, and the high-pressure valve is closed and the low-pressure valve is opened during the discharging stroke to send out the pressurized oil having performed work in the working chamber 25 (25A to 25F) to the low-pressure line 31. In contrast, if the working chamber 25 (25A to 25F) is in the non-active state, the high-pressure valve is maintained to be closed and the low-pressure valve is maintained to be open, so that the pressurized oil is reciprocated between the working chamber 25 (25A to 25F) and the low-pressure line 31 (i.e., high-pressure oil from the high-pressure line 30 is not accepted into the working chamber 25 (25A to 25F)).

In addition to the above configuration, the hydraulic machine according to some embodiments further includes the following configuration so that it is possible to suppress generation of oscillation in the hydraulic machine even if there is a trouble in a part of the plurality of cylinders 24 (24A to 24F).

While the hydraulic motor 20 including the eccentric cam 23 is illustrated as a hydraulic machine in the following description, a hydraulic machine according to the present embodiment is not limited to this, and may be other machines such as the hydraulic pump 10.

A trouble of the cylinder 24 (24A to 24F) includes, for example, a trouble of a component corresponding to the cylinder 24 (24A to 24F), such as an operation failure of a high-pressure valve or a low-pressure valve or abnormality of the piston 26 (26A to 26F). Hereinafter, a cylinder 24 with a trouble is referred to as a malfunctioning cylinder. Further, an abnormal working chamber refers to a working chamber with a malfunctioning cylinder that fails to function properly. An abnormal working chamber is continuously in the non-active state regardless of the control of the state-switch unit (e.g. in a case where the high-pressure valve is malfunctioning), or is maintained to be in the non-active state by the state-switch unit so that the malfunction of the cylinder 24 or of a related component does not affect operation of the hydraulic machine.

With reference to FIGs. 1 to 3, in some embodiments, the plurality of pistons 26 (26A to 26F) is configured to reciprocate in conjunction with the rotation shaft 22 at time phases varied from one another, in a period during which the rotation shaft 22 performs one rotation. For instance, as illustrated in FIGs. 2 and 3, in a case where the plurality of pistons 26 (26A to 26F) is disposed around the eccentric cam 23, each piston 26 reciprocates once between the top dead center and the bottom dead center in a period during which the rotation shaft 22 performs one rotation. Specifically, given that the time phase of the piston 26 at the top dead center is 0°, the time phase of the piston 26 having reached the bottom dead center is 180°, and the time phase of the piston 26 having returned to the top dead center is 360°.

In one embodiment, the hydraulic motor 20 further includes a controller 50 for controlling the state-switch unit.

The controller 50 is configured to fix at least one of the plurality of working chambers to the non-active state, or to reduce a frequency of switching the state of the at least one working chamber to the active state, the at least one working chamber (hereinafter, referred to as a target working chamber) having a time phase of reciprocating motion of the piston varied from that of an abnormal working chamber in which malfunction has occurred among the plurality of working chambers 25 (25A to 25F).

For instance, information of a malfunctioning cylinder (abnormal working chamber) is inputted to the controller 50 from the hydraulic motor 20. On the basis of this information, the controller 50 controls the state-switch unit to fix at least one target working chamber to the non-active state, or to reduce a frequency of switching the state of the at least one target working chamber to the active state, the at least one target working chamber having a time phase different from the time phase of the abnormal working chamber. At this time, the controller 50 may select the target working chamber from the information of the abnormal working chamber on the basis of a database storing a relationship between an abnormal working chamber and a target working chamber.

The controller 50 normally controls the active state and the non-active state of each working chamber 25 on the basis of an active frequency command value Fd. Specifically, the active frequency command value Fd is a parameter indicating a ratio of cylinders to be in the active state to all of the cylinders 24.

When there is a malfunctioning cylinder (abnormal working chamber), the controller 50 selects at least one target working chamber having a time phase different from that of the abnormal working chamber, and fixes the state of the target working chamber to the non-active state, or reduces a frequency of switching the state of the target working chamber to the active state, regardless of the active frequency command value Fd, using the state-switch unit.

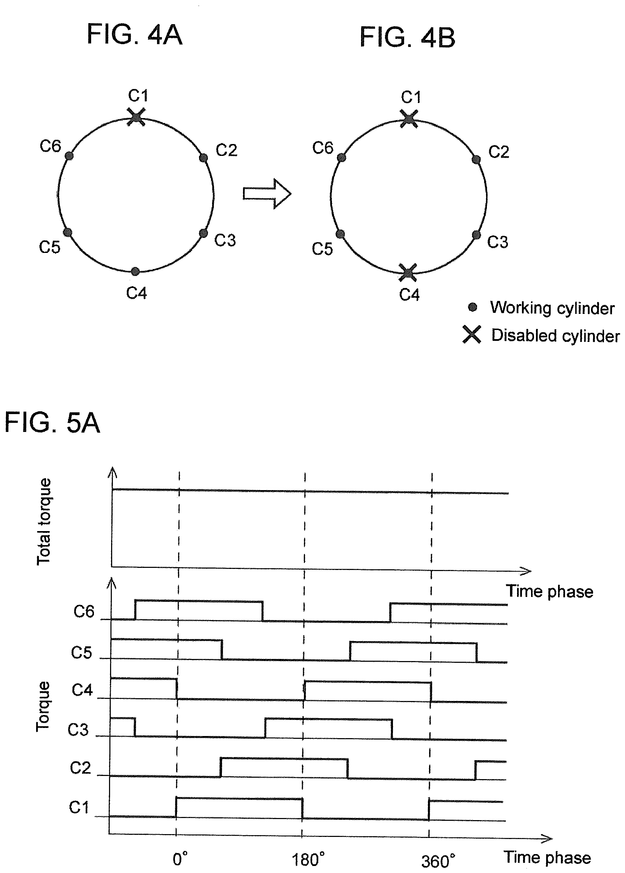

FIGs. 4A and 4B are each a schematic diagram of the arrangement of working cylinders and disabled cylinders in the hydraulic motor. FIG. 4A illustrates the arrangement at the time when there is an abnormal working chamber, and FIG. 4B illustrates the arrangement at the time when a working chamber corresponding to the abnormal working chamber is disabled. A working cylinder is a cylinder whose state is switchable by the state-switch unit between the non-active state and the active state. A disabled cylinder includes a malfunctioning cylinder and a target cylinder.

FIGs. 4A and 4B illustrate a configuration in which six cylinders C1 to C6 (24A to 24F) are arranged in the circumferential direction of the rotation shaft 22, corresponding to the hydraulic motor 20 illustrated in FIG. 2. The cylinders C1 to C6 are arranged clockwise in the circumferential direction.

In FIG. 4A, C1 is the malfunctioning cylinder corresponding to the abnormal working chamber. As described above, the abnormal working chamber is a working chamber in which malfunction has occurred due to a failure of the cylinder 24, for instance. Specifically, malfunction may be a state in which the working chamber has already become unable to function as a working chamber, or is currently functioning as a working chamber but serious abnormality is predicted to occur after continuous usage, due to sticking of the high-pressure valve, the low-pressure valve, or the piston 26, or damage or wear of a sliding part (ball or shoe) of the piston 26. The abnormality working chamber in which malfunction has occurred is normally fixed in the non-active state so as not to perform work. In FIG. 4A, a case where there is only one abnormality working chamber (one malfunctioning cylinder C1) is illustrated, but there may be two or more abnormal working chambers.

In FIG. 4B, in some embodiments, the controller 50 is configured to obtain, if there is a malfunctioning cylinder C1, the arrangement information of the malfunctioning cylinder C1 from various sensors, and fix at least one target cylinder (target working chamber) having a time phase varied from that of the malfunctioning cylinder C1 to the non-active state so that the target cylinder does not perform work. Alternatively, the controller 50 is configured to reduce the frequency of switching the at least one target cylinder (target working chamber) having a time phase different from that of the malfunctioning cylinder C1 to the active state.

In this configuration, the target working chamber having a time phase at which the piston 26 reciprocates different from that of the abnormal working chamber is fixed to the non-active state, or the frequency of switching the state of the target working chamber to the active state is reduced, so that the working chamber 25 having a time phase different from that of the abnormal working chamber does not perform work as well, or performs work less frequently. In this way, it is possible to suppress a torque fluctuation due to the abnormal working chamber even if there is a trouble in a part of the cylinders 24. Thus, it is possible to average the torque in operation of the hydraulic motor 20, which enables operation of the hydraulic motor 20 with reduced oscillation and reduced noise.

As illustrated in FIG. 4B, in one embodiment, the controller 50 is configured to fix as many working chamber (target cylinder C4) as the abnormality working chamber corresponding to the malfunctioning cylinder C1 to the non-active state, the as many working chamber having a piston reciprocating at an opposite phase in terms of time from that of the abnormal working chamber corresponding to the malfunctioning cylinder C1.

In the present specification, the working chamber at an "opposite phase" from that of the abnormal working chamber refers to a working chamber having a time phase varied by 180° from the abnormal working chamber, or a working chamber at a time phase closest to the time phase varied by 180°.

FIGs. 5A to 5C are graphs showing torques applied to the rotation shaft 22 from the respective cylinders 24 in the cylinder arrangement illustrated in FIG. 4 and the total torque of all cylinders 24 over the time phase. The displacement of the torque illustrated in FIGs. 5A to 5C is an example in a case where the rotation shaft 22 rotates clockwise with the cylinder arrangement illustrated in FIG. 4.

FIG. 5A is a graph showing the torque of each cylinder C1 to C6 and the total torque over the time phase when there is no abnormal working chamber (malfunctioning cylinder C1). As illustrated in the drawing, normally, the time phases of the respective cylinders C1 to C6 are determined so that the torques of the respective cylinders C1 to C6 are at good balance. The cylinders C1 to C6 have a time phase varied by 60° from the adjacent cylinder. In FIG. 5A, the total torque is substantially constant.

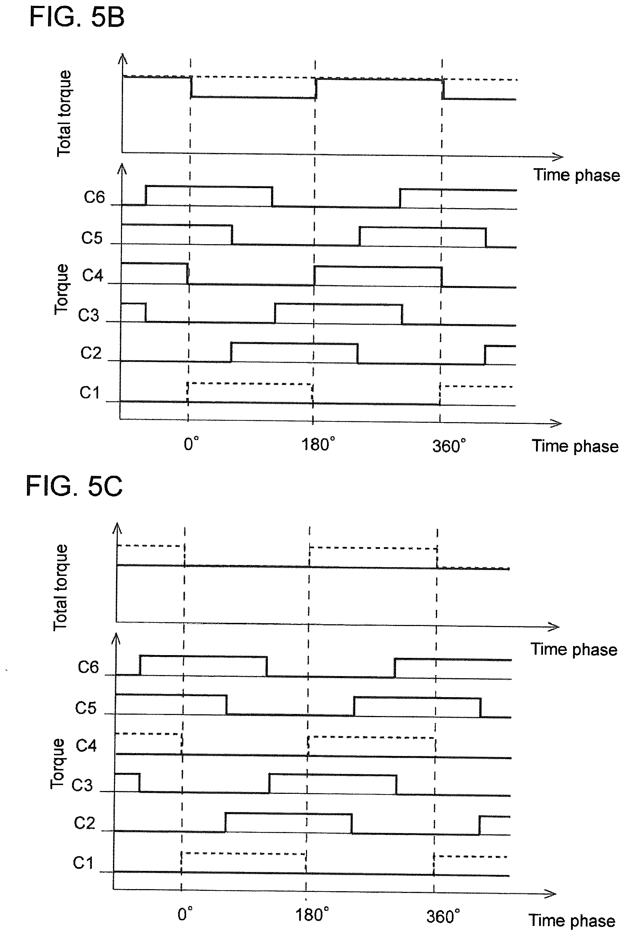

FIG. 5B is a graph illustrating the torque of each cylinder C1 to C6 and the total torque over the time phase when there is an abnormal working chamber (malfunctioning cylinder C1). As illustrated in the drawing, when there is an abnormal working chamber (malfunctioning cylinder C1), the total torque decreases at the time phase corresponding to the abnormal working chamber, and the total torque is not constant. Thus, the total torque decreases at the time phase corresponding to the malfunctioning cylinder C1, which may increase oscillation or noise of the hydraulic motor 20.

FIG. 5C is a graph illustrating the torque of each cylinder C1 to C6 and the total torque over the time phase when there is an abnormal working chamber (malfunctioning cylinder C1) and, in response, the state of the target working chamber at the opposite phase is switched to the non-active state. As illustrated in the drawing, if the normal target cylinder C4 at the opposite phase from the abnormal working chamber (malfunctioning cylinder C1) is fixed to the non-active state, the total torque is averaged, which makes it possible to reduce oscillation and noise.

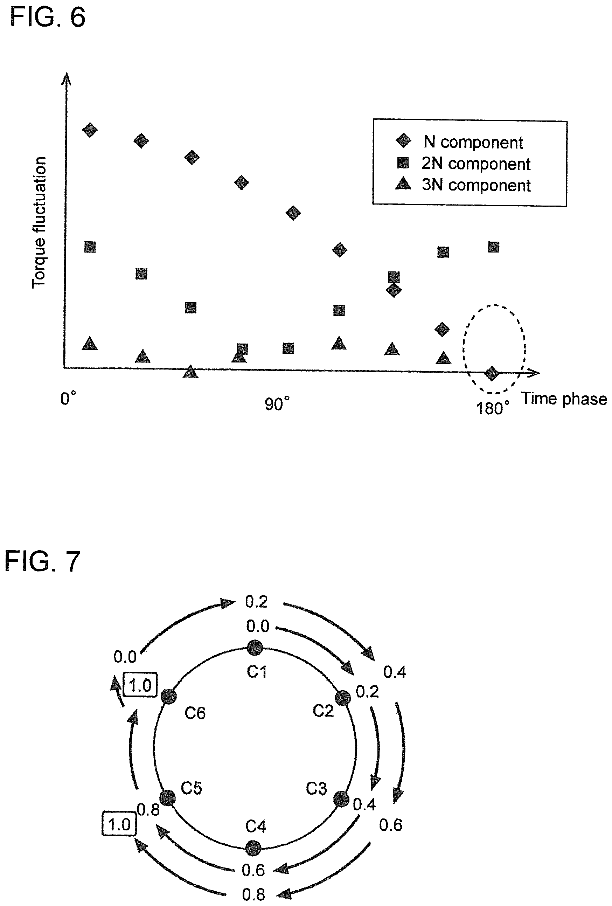

FIG. 6 is a graph showing the torque fluctuation of each component. As illustrated in the drawing, when the normal cylinder C4 having a time phase varied by 180° from that of the malfunctioning cylinder C1 is fixed in the non-active state, it is possible to reduce the torque fluctuation of the rotation speed component (N component).

FIG. 7 is a diagram for explaining the setting procedure of non-active working chambers based on an active frequency command value Fd according to one embodiment. FIG. 7 corresponds to the hydraulic motor 20 illustrated in FIG. 2.

In one embodiment, the controller 50 is configured to determine whether to operate the working chamber 25 (25A to 25F) corresponding to each of the decision points in the active state at the plurality of decision points set for each time phase within a period during which the rotation shaft 22 performs one rotation, if all of the working chambers 25 (25A to 25F) are normal. The decision point is a point set for each time phase in the period corresponding to one rotation of the rotation shaft 22, and a point at which the controller 50 determines whether to operate each working chamber 25 (25A to 25F) in the active state. For instance, the decision point may be a timing immediately before the piston 26 reaches the top dead center.

Specifically, if all of the working chambers 25 (25A to 25F) are normal, the controller 50 adds Fd every time each of the plurality of decision points comes, determines whether a cumulative value of Fd has reached a threshold value at each of the decision points, and switches the state of the working chamber corresponding to the decision point at which the cumulative value is at least the threshold value to the active state. In the example illustrated in FIG. 7, Fd is 0.2 and the threshold value is 1.0. In the drawing, there are six decision points respectively corresponding to the cylinders C1 to C6. For instance, if the cumulative value (C1) of Fd at the decision point of the cylinder C1 is zero, Fd 0.2 is added when the decision point of the cylinder C2 comes following that of the cylinder C1, so that the cumulative value (C2) becomes 0.2 at the decision point of the cylinder C2. Next, when the decision point of the cylinder C3 comes following that of the cylinder C2, Fd 0.2 is added to the cumulative value (C2), and the cumulative value (C3) becomes 0.4 at the decision point of the cylinder C3. As described above, every time each decision point comes, Fd 0.2 is added. Also, at each time, the controller 50 determines whether the cumulative value has reached the preset threshold 1.0. In the example illustrated in FIG. 7, at the decision point of the cylinder C6, the cumulative value of Fd is 1.0. Thus, the state of the cylinder C6 is switched to the active state. Further, the cumulative value of Fd is reset to zero for the cylinder C6 in a state switched to the active state. Then, similarly to the above, Fd is added up again at each decision point.

In the above configuration, if all of the working chambers 25 (25A to 25F) are normal, Fd is added every time each decision point comes. Then, the state of the working chamber 25 (25A to 25F) corresponding to the decision point at which the cumulative value is at least the threshold value is operated in the active state. In contrast, if the cumulative value is the threshold or less at a decision point, the state of the working chamber 25 (25A to 25F) corresponding to the decision point is operated in the non-active state. Performing such a control makes it possible to determine which working chambers 25 (25A to 25F) to operate in the active state in accordance with Fd.

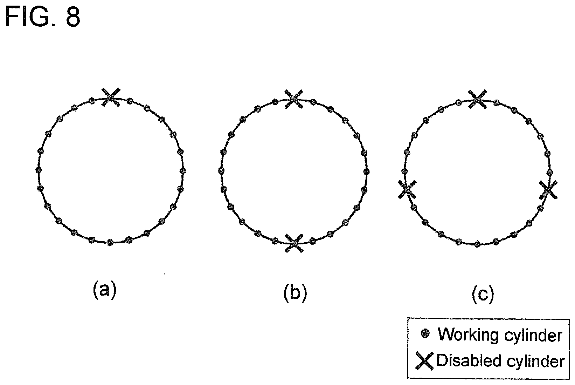

FIGs. 8A to 8C illustrate the arrangement examples of cylinders to be excluded from the decision points. FIG. 8A is a schematic diagram of a case where no decision point is excluded, FIG. 8B is a schematic diagram of a case where one decision point is excluded, and FIG. 8C is a schematic diagram of a case where two decision points are excluded.

In one embodiment, the controller 50 is configured to determine, only at effective decision points after excluding a decision point corresponding to the time phase of the reciprocating motion of the piston 26 of the abnormal working chamber and at least one other decision point from the plurality of decision points, whether to operate the working chambers 25 (25A to 25F) corresponding to the effective decision points in the active state, if malfunction has occurred in a part of the working chambers 25 (25A to 25F).

In the example illustrated in FIG. 8A, only the malfunctioning cylinder (abnormal working chamber) is illustrated.

In the example illustrated in FIG. 8B, the effective decision points are remainder of the plurality of decision points after excluding the decision point corresponding to the time phase of the reciprocating motion of the piston of the abnormal working chamber and the decision point at the opposite phase (180°) from that decision point in terms of time. In this way, it is possible to reduce mainly oscillation of IN component of the hydraulic machine effectively.

In the example illustrated in FIG. 8C, the effective decision points are remainder of the plurality of decision points after excluding the decision point corresponding to the time phase of the reciprocating motion of the piston of the abnormal working chamber and two decision points at the phase angle varied by 120° from that decision point. In this way, it is possible to reduce mainly oscillation of 2N component of the hydraulic machine effectively.

With the above configuration, excluding the decision point of the abnormal working chamber makes it possible to prevent the working chamber 25 (25A to 25F) corresponding to the decision point next to that of the abnormal working chamber from being in the active state too frequently. In this way, it is possible to suppress IN-component oscillation (oscillation of a frequency component corresponding to the rotation speed of the rotation shaft) of the hydraulic motor 20 caused by the active frequency of the working chamber 25 (25A to 25F) corresponding to the decision point next to that of the abnormal working chamber being higher than that of the other working chambers. Further, in addition to the decision point of the working chamber 25 (25A to 25F) at the same phase as the abnormal working chamber, at least one decision point other than that decision point is excluded. In this way, it is possible to average the torque in operation of the hydraulic motor 20, which makes it possible to suppress oscillation of the hydraulic motor 20 more effectively.

Further, the controller 50 may be configured to, if there is malfunction in a part of the working chambers 25, add Fd every time each of the effective decision points comes, determine whether a cumulative value of Fd has reached a threshold value at each of the effective decision points, and switch the state of the working chamber corresponding to an effective decision point at which the cumulative value is at least the threshold value to the active state.

In the above configuration, if there is malfunction in a part of the working chambers 25 (25A to 25F), Fd is added every time each effective decision point comes. Specifically, when selecting the working chamber 25 (25A to 25F) to be operated in the active state, decision points other than the effective decision points are excluded, and the working chamber 25 (25A to 25F) to be operated in the active state is selected only at the effective decision points. Thus, it is possible to suppress a torque fluctuation due to the abnormal working chamber. In this way, it is possible to average the torque in operation of the hydraulic motor 20, which enables operation of the hydraulic motor 20 with reduced oscillation and reduced noise.

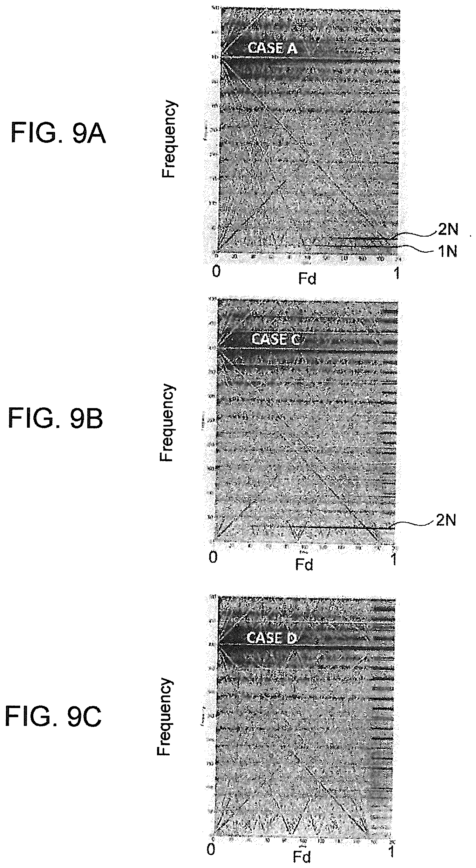

FIGs. 9A to 9C are diagrams illustrating the relationship between Fd and the oscillation frequency of the hydraulic motor 20. FIG. 9A illustrates an analysis result in a case where no decision point is excluded. FIG. 9B illustrates an analysis result in a case where two decision points are excluded (see FIG. 8B). FIG. 9C illustrates an analysis result in a case where three decision points are excluded (see FIG. 8C). In FIGs. 9A to 9C, x-axis is Fd (0 ≤ Fd ≤ 1), and y-axis is the oscillation frequency.

As illustrated in FIG. 9A, oscillation having a frequency component (IN component) corresponding to the rotation speed of the hydraulic motor 20 and integral-multiple frequency components of the IN component is occurring. In FIG. 9A, there is an oscillation component with a frequency changing linearly with Fd. This is an oscillation component corresponding to the frequency at which the decision point to switch to the active state comes (or the frequency at which the decision point to switch to the non-active state comes).

In contrast, in FIGs. 9B and 9C, the IN oscillation component is suppressed because the decision points are excluded. Further, in the case of FIG. 9C, not only the IN oscillation component but also the 2N oscillation component is suppressed.

As described above, it is now clear that oscillation of the hydraulic motor 20 can be suppressed by excluding decision points.

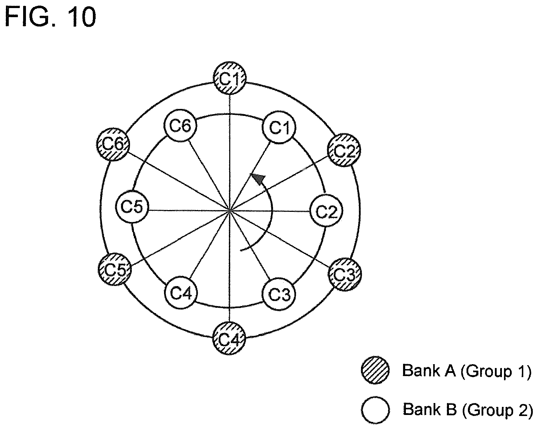

FIG. 10 is a schematic diagram of decision points having different thresholds. In FIG. 10, C1 to C6 represented as shaded circles correspond to the first group, which is the bank A illustrated in FIG. 3, and C1 to C6 represented as hollow circles correspond to the second group, which is the bank B illustrated in FIG. 3.

As illustrated in the drawing, in another embodiment, the controller 50 is configured to set stricter determination conditions to operate the working chambers 25 (25A to 25F) corresponding to the respective decision points in the active state, for the decision points of the first group including the decision points corresponding to the time phase of the reciprocating motion of the pistons 26 of the abnormal working chamber, than for the decision points of the second group including decision points other than those belonging to the first group, if there is malfunction in a part of the working chambers 25 (25A to 25F). For instance, as illustrated in FIG. 10, the decision points of the first group and those of the second group may be disposed alternately. Further, the decision points of the first group and those of the second group may be the same or substantially the same in number.

In this way, the state of the working chambers 25 (25A to 25F) corresponding to the decision points of the first group is switched to the active state less frequently than the working chambers 25 (25A to 25F) corresponding to the decision points of the second group. Thus, during low-load operation of the hydraulic motor 20 in which the ratio of the working chambers 25 (25A to 25F) to be in the active state is low, most of the working chambers 25 (25A to 25F) corresponding to the decision points of the first group do not enter the active state, but the working chambers 25 (25A to 25F) corresponding to the decision points of the second group enter the active state almost exclusively. That is, the decision points of the first group are substantially excluded. Thus, the decision points of the working chambers 25 (25A to 25F) at the same phase as that of the abnormal working chamber are substantially excluded, which makes it possible to prevent the working chamber 25 (25A to 25F) corresponding to the decision point of the second group, and being disposed next to the abnormal working chamber from being in the active state too frequently. In this way, it is possible to suppress oscillation (oscillation of a frequency component corresponding to the rotation speed of the rotation shaft) of the hydraulic motor 20 caused by the active frequency of the working chamber 25 (25A to 25F) corresponding to the decision point of the second group, the decision point and being next to the abnormal working chamber being higher than the working chambers 25 (25A to 25F) corresponding to the other decision points of the second group.

In one embodiment, in the above configuration, the controller 50 is configured to switch the state of the working chamber 25 (25A to 25F) corresponding to the decision point of the first group at which the cumulative value Fd is at least the first threshold to the active state, and to switch the state of the working chamber 25 (25A to 25F) corresponding to the decision point of the second group at which the cumulative value is at least the second threshold value to the active state, if there is malfunction in a part of the working chambers 25 (25A to 25F). The second threshold value is smaller than the first threshold value. For instance, the first threshold value is 2.0 and the second threshold value is 1.0.

In the above configuration, if there is malfunction in a part of the working chambers 25 (25A to 25F), the first threshold value is used for the decision points of the first group corresponding to the abnormal working chamber, and the second threshold value smaller than the first threshold value is used at the decision points of the second group (which are not the decision points belonging to the first group). In this way, the active frequency of the working chamber 25 (25A to 25F) corresponding to the decision point of the second group next to the abnormal working chamber becomes higher than that of the working chambers 25 (25A to 25F) corresponding to the other decision points of the second group, which makes it possible to suppress oscillation of the hydraulic motor 20 appropriately.

According to the above embodiments, it is possible to suppress a torque fluctuation due to an abnormal working chamber with malfunction. Thus, it is possible to average the torque in operation of the hydraulic machine, which enables operation of the hydraulic machine with reduced oscillation and reduced noise.

Embodiments of the present invention were described in detail above, but the present invention is not limited thereto, and various amendments and modifications may be implemented.

For instance, while the hydraulic pump 10 and the hydraulic motor 20 of the wind turbine power generating apparatus 1 are described as hydraulic machines in the above embodiment, the hydraulic machine of the present embodiment may be applied to hydraulic machines of other renewable-energy type power generating apparatuses or other apparatuses using a hydraulic machine besides the wind turbine power generating apparatus 1.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A hydraulic machine (20), comprising:
a rotation shaft (22);
a plurality of pistons (26) configured to reciprocate in a period corresponding to a single rotation of the rotation shaft (22), the plurality of pistons (26) including pistons (26) reciprocating along with the rotation of the rotation shaft (22) at time phases of reciprocating motion varied among the pistons (26);
a plurality of cylinders (25) forming a plurality of working chambers (25) with the plurality of pistons (26);
a state-switch unit for switching a state of each of the working chambers (25) between an active state in which energy is converted between rotation energy of the rotation shaft (22) and pressure energy in the working chamber (25) and a non-active state in which the energy is not converted; and
a controller (50) for controlling the state-switch unit,
**characterized in that** the controller (50) is configured to
fix a state of at least one of the plurality of working chambers (25) to the non-active state, the at least one working chamber (25) corresponding to a time phase different from the time phase of reciprocation of the piston (26) of an abnormal working chamber (25) with a malfunction, or to
reduce a frequency of switching the state of the at least one working chamber (25) to the active state.

2. The hydraulic machine (20) according to claim 1,
wherein the controller (50) is configured to fix a state of as many working chamber (25) as the abnormal working chamber (25) to the non-active state, the as many working chamber (25) corresponding to the piston (26) reciprocating at a phase opposite to that of the abnormal working chamber (25) in terms of time.

3. The hydraulic machine (20) according to claim 1 or 2,
wherein the controller (50) is configured to:
if all of the working chambers (25) are normal, at a plurality of decision points which is set for the respective time phases in the period corresponding to the single rotation of the rotation shaft (22), determine whether to operate the working chambers (25) corresponding to the respective decision points in the active state; and
if a part of the working chambers (25) has the malfunction, at only an effective decision point which is the plurality of decision points excluding: a decision point corresponding to the time phase of reciprocation of the piston (26) of the abnormal working chamber(25); and at least one decision point which is not the decision point corresponding to the abnormal working chamber (25), determine whether to operate the working chamber (25) corresponding to the effective decision point in the active state.

4. The hydraulic machine (20) according to claim 3,
wherein the effective decision point is the plurality of decision points excluding: the decision point corresponding to the time phase of reciprocation of the piston (26) of the abnormal working chamber (25); and a decision point having a phase opposite to that of the decision point corresponding to the abnormal working chamber (25) in terms of time.

5. The hydraulic machine (20) according to claim 3,
wherein the effective decision point is the plurality of decision points excluding: the decision point corresponding to the time phase of reciprocation of the piston (26) of the abnormal working chamber (25); and two decision points each of which is varied by a phase angle of 120 degrees from the decision point corresponding to the abnormal working chamber (25) .

6. The hydraulic machine (20) according to any one of claims 3 to 5,
wherein the controller (50) is configured to:
if all of the working chambers (25) are normal, add an active frequency command value Fd every time one of the plurality of decision points comes, determine whether a cumulative value of the active frequency command values Fd is a threshold value or more at each of the decision points, and switch the state of the working chamber (25) corresponding to a decision point at which the cumulative value is the threshold value or more to the active state; and
if a part of the working chambers (25) has the malfunction, add an active frequency command value Fd every time one of the effective decision points comes, determine whether a cumulative value of the active frequency command values Fd is a threshold value or more at each of the effective decision points, and switch the state of the working chamber (25) corresponding to an effective decision point at which the cumulative value is the threshold value or more to the active state.

7. The hydraulic machine (20) according to claim 1 or 2,
wherein the controller (50) is configured to:
if all of the working chambers (25) are normal, at a plurality of decision points which is set for the respective time phases in the period corresponding to the single rotation of the rotation shaft (22), determine whether to operate the working chambers (25) corresponding to the respective decision points in the active state under the same determination condition; and
if a part of the working chambers (25) has the malfunction, at the decision points in a first group including the decision point corresponding to the time phase of reciprocation of the piston (26) of the abnormal working chamber (25), determine whether to operate the working chambers (25) corresponding to the respective decision points in the first group in the active state, under a strict determination condition as compared to the decision points in a second group which are not the decision points in the first group.

8. The hydraulic machine (20) according to claim 7,
wherein the controller (50) is configured to:
if all of the working chambers (25) are normal, add an active frequency command value Fd every time one of the plurality of decision points comes, determine whether a cumulative value of the active frequency command values Fd is a common threshold value or more at each of the decision points, and switch the state of the working chamber (25) corresponding to a decision point at which the cumulative value is the common threshold value or more to the active state; and
if a part of the working chambers has the malfunction, switch the state of the working chamber (25) corresponding to a decision point of the first group at which the cumulative value is a first threshold value or more to the active state, and switch the state of the working chamber (25) corresponding to a decision point of the second group at which the cumulative value is a second threshold value or more to the active state, the second threshold value being smaller than the first threshold value.

9. The hydraulic machine (20) according to any one of claims 1 to 8,
wherein the state-switching unit includes:
a high-pressure valve for switching a communication state between a high pressure line (30) and each of the working chambers (25);
a low-pressure valve for switching a communication state between a low pressure line (31) and each of the working chambers (25),
wherein, for the working chamber (25) in the active state, the high-pressure valve and the low-pressure valve are opened and closed in accordance with the phase of reciprocation of the piston (26), and
wherein, for the working chamber (25) in the non-active state, a state in which the high-pressure valve is closed and the low-pressure valve is open is maintained, regardless of the phase of reciprocation of the piston (26).

10. A renewable energy power generating apparatus (1), comprising:
a rotor (4) configured to be rotatable by renewable energy;
a hydraulic pump (10) configured to be driven by the rotor (4) to generate pressurized oil;
a hydraulic motor (20) configured to be driven by the pressurized oil; and
a generator (8) configured to be driven by the hydraulic motor (20),
wherein at least one of the hydraulic pump (10) or the hydraulic motor (20) comprises the hydraulic machine according to any one of claims 1 to 9.

11. A method of operating a hydraulic machine (20) which comprises:
a rotation shaft (22);
a plurality of pistons (26) configured to reciprocate in a period corresponding to a single rotation of the rotation shaft (22), the plurality of pistons (26) including pistons (26) reciprocating along with the rotation of the rotation shaft (22) at time phases varied among the pistons;
a plurality of cylinders (24) forming a plurality of working chambers (25) with the plurality of pistons (26); and
a state-switch unit for switching a state of each of the working chambers (25) between an active state in which energy is converted between rotation energy of the rotation shaft (22) and pressure energy in the working chamber (25) and a non-active state in which the energy is not converted,
the method **characterized in** comprising
fixing a state of at least one of the plurality of working chambers (25) to the non-active state, the at least one working chamber (25) corresponding to a time phase which is different from the time phase of reciprocation of the piston (26) of an abnormal working chamber (25) with a malfunction, or reducing a frequency of switching the state of the at least one working chamber (25) to the active state.

## Patentansprüche

1. Eine hydraulische Maschine (20) mit:
einer Rotationswelle (22),
einer Vielzahl von Kolben (26), die konfiguriert sind, um sich in einer Periode, die einer einzelnen Rotation der Rotationswelle (22) entspricht, hin- und herzubewegen, wobei die Vielzahl von Kolben (26) Kolben (26) umfasst, die sich zusammen mit der Rotation der Rotationswelle in Zeitphasen einer Hin- und Herbewegung, die zwischen den Kolben (26) unterschiedlich sind, hin- und herbewegen,
einer Vielzahl von Zylindern (25), die eine Vielzahl von Arbeitskammern (25) mit der Vielzahl von Kolben (26) bilden,
einer Zustandsumschalteinheit zum Umschalten eines Zustands von jeder der Arbeitskammern (25) zwischen einem aktiven Zustand, in dem Energie zwischen Rotationsenergie der Rotationswelle (22) und Druckenergie in der Arbeitskammer (25) konvertiert wird, und einem inaktiven Zustand, in dem die Energie nicht umgewandelt wird, und
einem Kontroller (50) zum Steuern der Zustandsumschalteinheit,
**dadurch gekennzeichnet, dass** der Kontroller (50) konfiguriert ist, um
einen Zustand von zumindest einer der Vielzahl von Arbeitskammern (25) bei dem inaktiven Zustand zu fixieren, wobei die zumindest eine Arbeitskammer (25) einer Zeitphase entspricht, die von der Zeitphase der Hin- und Her-Bewegung des Kolbens (26) einer abnormalen Arbeitskammer (25) mit einer Fehlfunktion verschieden ist, oder um
eine Frequenz des Umschaltens des Zustands der zumindest einen Arbeitskammer (25) zu dem aktiven Zustand zu verringern.

2. Die hydraulische Maschine (20) gemäß Anspruch 1,
wobei der Kontroller (50) konfiguriert ist, um einen Zustand von so vielen Arbeitskammern (25) wie die abnormale Arbeitskammer (25) in dem inaktiven Zustand zu fixieren, wobei die so vielen Arbeitskammern (25) dem Kolben (26) entsprechen, der sich hinsichtlich der Zeit mit einer Phase entgegengesetzt zu der der abnormalen Arbeitskammer (25) hin und herbewegt.

3. Die hydraulische Maschine (20) gemäß Anspruch 1 oder 2,
wobei der Kontroller (50) konfiguriert ist, um:
wenn alle Arbeitskammern (25) normal sind, bei einer Vielzahl von Entscheidungspunkten, die für die jeweiligen Zeitphasen in der der einzelnen Rotation der Rotationswelle (20) entsprechenden Periode eingestellt ist, zu bestimmen, ob die Arbeitskammern (25) entsprechend den jeweiligen Entscheidungspunkten in dem aktiven Zustand zu betreiben sind, und
wenn ein Teil der Arbeitskammern (25) die Fehlfunktion aufweist, nur bei einem effektiven Entscheidungspunkt, der die Vielzahl von Entscheidungspunkten ist mit Ausnahme von: einem Entscheidungspunkt entsprechend der Zeitphase der Hin- und Herbewegung des Kolbens (26) der abnormalen Arbeitskammer (25), und zumindest einem Entscheidungspunkt, der nicht der Entscheidungspunkt entsprechend der abnormalen Arbeitskammer (25) ist, zu bestimmen, ob die Arbeitskammer (25) entsprechend dem effektiven Entscheidungspunkt in dem aktiven Zustand zu betreiben ist.

4. Die hydraulische Maschine (20) gemäß Anspruch 3,
wobei der effektive Entscheidungspunkt die Vielzahl von Entscheidungspunkten ist mit Ausnahme von: dem Entscheidungspunkt entsprechend der Zeitphase der Hin- und Herbewegung des Kolbens (26) der abnormalen Arbeitskammer (25), und einem Entscheidungspunkt mit einer Phase entgegengesetzt zu der des Entscheidungspunkts entsprechend der abnormalen Arbeitskammer (25) hinsichtlich der Zeit.

5. Die hydraulische Maschine (20) gemäß Anspruch 3,
wobei der effektive Entscheidungspunkt die Vielzahl von Entscheidungspunkten ist mit Ausnahme von: dem Entscheidungspunkt entsprechend der Zeitphase der Hin- und Herbewegung des Kolbens (26) der abnormalen Arbeitskammer (25), und zwei Entscheidungspunkten, von denen jeder um einen Phasenwinkel von 120 Grad von dem Entscheidungspunkt entsprechend der abnormalen Arbeitskammer (25) abweicht.

6. Die hydraulische Maschine (20) gemäß einem der Ansprüche 3 bis 5,
wobei der Kontroller (50) konfiguriert ist, um:
wenn alle Arbeitskammern (25) normal sind, einen aktiven Frequenzbefehlswert Fd zu jedem Zeitpunkt hinzuzuaddieren, zu dem einer der Vielzahl von Entscheidungspunkten kommt, zu bestimmen, ob ein kumulativer Wert der aktiven Frequenzbefehlswerte Fd ein Schwellenwert oder darüber ist, bei jedem der Entscheidungspunkte, und den Zustand der Arbeitskammer (25) entsprechend einem Entscheidungspunkt, bei dem der kumulative Wert der Schwellenwert oder darüber ist, zu dem aktiven Zustand umzuschalten, und
wenn ein Teil der Arbeitskammern (25) die Fehlfunktion aufweist, einen aktiven Frequenzbefehlswert Fd zu jedem Zeitpunkt hinzuzuaddieren, zu dem einer der effektiven Entscheidungspunkte kommt, zu bestimmen, ob ein kumulativer Wert der aktiven Frequenzbefehlswerte Fd ein Schwellenwert oder darüber ist, bei jedem der effektiven Entscheidungspunkte, und den Zustand der Arbeitskammer (25) entsprechend einem effektiven Entscheidungspunkt, bei dem der kumulative Wert der Schwellenwert oder darüber ist, zu dem aktiven Zustand umzuschalten.

7. Die hydraulische Maschine (20) gemäß Anspruch 1 oder 2,
wobei der Kontroller (50) konfiguriert ist, um:
wenn alle Arbeitskammern (25) normal sind, bei einer Vielzahl von Entscheidungspunkten, die für die jeweiligen Zeitphasen in der Periode entsprechend der einzelnen Rotation der Rotationswelle (20) eingestellt ist, zu bestimmen, ob die Arbeitskammern (25) entsprechend den jeweiligen Entscheidungspunkten in dem aktiven Zustand unter derselben Bestimmungsbedingungen zu betreiben sind, und
wenn ein Teil der Arbeitskammern (25) die Fehlfunktion aufweist, bei den Entscheidungspunkten in einer ersten Gruppe enthaltend den Entscheidungspunkt entsprechend der Zeitphase der Hin- und Herbewegung des Kolbens (26) der abnormalen Arbeitskammer (25) zu bestimmen, ob die Arbeitskammern (25) entsprechend den jeweiligen Entscheidungspunkten in der ersten Gruppe in dem aktiven Zustand zu betreiben sind, unter einer strengen Bestimmungsbedingung im Vergleich zu den Entscheidungspunkten in einer zweiten Gruppe, die nicht die Entscheidungspunkte in der ersten Gruppe sind.

8. Die hydraulische Maschine (20) gemäß Anspruch 7,
wobei der Kontroller (50) konfiguriert ist, um:
wenn alle Arbeitskammern (25) normal sind, einen aktiven Frequenzbefehlswert Fd zu jedem Zeitpunkt hinzuzuaddieren, zu dem einer der Vielzahl von Entscheidungspunkten kommt, zu bestimmen, ob ein kumulativer Wert der aktiven Frequenzbefehlswerte Fd ein gemeinsamer Schwellenwert oder darüber ist, bei jedem der Entscheidungspunkte, und den Zustand der Arbeitskammer (25) entsprechend einem Entscheidungspunkt, bei dem der kumulative Wert der gemeinsame Schwellenwert oder darüber ist, zu dem aktiven Zustand umzuschalten, und
wenn ein Teil der Arbeitskammern die Fehlfunktion aufweist, den Zustand der Arbeitskammer (25) entsprechend einem Entscheidungspunkt der ersten Gruppe, bei dem der kumulative Wert ein erster Schwellenwert oder darüber ist, zu dem aktiven Zustand umzuschalten, und den Zustand der Arbeitskammer (25) entsprechend einem Entscheidungspunkt der zweiten Gruppe, bei dem der kumulative Wert ein zweiter Schwellenwert oder darüber ist, zu dem aktiven Zustand umzuschalten, wobei der zweite Schwellenwert kleiner ist als der erste Schwellenwert.

9. Die hydraulische Maschine (20) gemäß einem der Ansprüche 1 bis 8,
wobei die Zustandsumschalteinheit aufweist:
ein Hochdruckventil zum Umschalten eines Verbindungszustands zwischen einer Hochdruckleitung (30) und jeder der Arbeitskammern (25),
ein Niederdruckventil zum Umschalten eines Verbindungszustands zwischen einer Niederdruckleitung (31) und jeder der Arbeitskammern (25),
wobei, für die Arbeitskammer (25) in dem aktiven Zustand, das Hochdruckventil und das Niederdruckventil gemäß der Phase der Hin- und Herbewegung des Kolbens (26) geöffnet und geschlossen werden, und
wobei, für die Arbeitskammer (25) in dem inaktiven Zustand, ein Zustand, bei dem das Hochdruckventil geschlossen ist und das Niederdruckventil geöffnet ist, beibehalten wird, unabhängig von der Phase der Hin- und Herbewegung des Kolbens (26) .

10. Eine Vorrichtung zum Erzeugen von erneuerbarer Energie (1) mit:
einem Rotor, der konfiguriert ist, um durch erneuerbare Energie gedreht zu werden,
einer Hydraulikpumpe (10), die konfiguriert ist, um durch den Rotor (4) angetrieben zu werden, um Öl unter Druck zu erzeugen, und
einem Hydraulikmotor (20), der konfiguriert ist, um durch das Öl unter Druck angetrieben zu werden, und
einem Generator (8), der konfiguriert ist, um durch den Hydraulikmotor (20) angetrieben zu werden,
wobei zumindest eine von der Hydraulikpumpe (10) oder dem Hydraulikmotor (20) die hydraulische Maschine gemäß einem der Ansprüche 1 bis 9 aufweist.

11. Ein Verfahren zum Betreiben einer hydraulischen Maschine (20), die aufweist:
eine Rotationswelle (22),
eine Vielzahl von Kolben (26), die konfiguriert sind, um sich in einer Periode, die einer einzelnen Rotation der Rotationswelle (22) entspricht, hin- und herzubewegen, wobei die Vielzahl von Kolben (26) Kolben (26) umfasst, die sich zusammen mit der Rotation der Rotationswelle in Zeitphasen, die zwischen den Kolben (26) unterschiedlich sind, hin- und herbewegen,
eine Vielzahl von Zylindern (25), die eine Vielzahl von Arbeitskammern (25) mit der Vielzahl von Kolben (26) bilden, und
eine Zustandsumschalteinheit zum Umschalten eines Zustands von jeder der Arbeitskammern (25) zwischen einem aktiven Zustand, in dem Energie zwischen Rotationsenergie der Rotationswelle (22) und Druckenergie in der Arbeitskammer (25) konvertiert wird, und einem inaktiven Zustand, in dem die Energie nicht umgewandelt wird,
wobei das Verfahren **dadurch gekennzeichnet ist, dass** es aufweist:
Fixieren eines Zustands von zumindest einer aus der Vielzahl von Arbeitskammern (25) in dem inaktiven Zustand, wobei die zumindest eine Arbeitskammer (25) einer Zeitphase entspricht, die sich von der Zeitphase der Hin- und einer Hydraulikpumpe (10), die konfiguriert ist, um durch das Öl unter Druck angetrieben zu werden, und
des Kolbens (26) einer abnormalen Arbeitskammer (25) mit einer Fehlfunktion unterscheidet, oder Verringern einer Frequenz des Umschaltens des Zustands von der zumindest einen Arbeitskammer (25) in den aktiven Zustand.

## Revendications

1. Machine (20) hydraulique, comprenant :
un arbre (22) de rotation ;
une pluralité de pistons (26), configurés pour aller et venir en une durée correspondant à un seul tour de l'arbre (22) de rotation, la pluralité de pistons (26) comprenant des pistons (26) allant et venant en même temps que la rotation de l'arbre (22) de rotation à des phases de temps de mouvement de va et vient variées entre les pistons (26) ;
une pluralité de cylindres (25), formant une pluralité de chambres (25) de travail avec la pluralité de pistons (26) ;
une unité de commutation d'état pour commuter un état de chacune des chambres (25) de travail entre un état actif, dans lequel de l'énergie est transformée entre de l'énergie de rotation de l'arbre (22) de rotation et de l'énergie de pression dans la chambre (25) de travail, et un état inactif, dans lequel l'énergie n'est pas transformée ; et
une unité (50) de commande, pour commander l'unité de commutation d'état,
**caractérisée en ce que** l'unité (50) de commande est configurée pour
fixer un état d'au moins l'une de la pluralité des chambres (25) de travail à l'état inactif, la au moins une chambre (25) de travail correspondant à une phase de temps différente de la phase de temps de va et vient du piston (26) d'une chambre (25) de travail anormale, ayant un défaut de fonctionnement ou pour
réduire une fréquence de commutation de l'état de la au moins une chambre (25) de travail à l'état actif.

2. Machine (20) hydraulique suivant la revendication 1,
dans laquelle l'unité (50) de commande est configurée pour fixer un état d'autant de chambres (25) de travail que la chambre (25) de travail anormale à l'état inactif, le autant de chambres (25) de travail correspondant au piston (26) allant et venant à une phase opposée à celle de la chambre (25) de travail anormale en termes de temps.

3. Machine (20) hydraulique suivant la revendication 1 ou 2,
dans laquelle l'unité (50) de commande est configurée pour :
si toutes les chambres (25) de travail sont normales, à une pluralité de points de décision, qui est fixée pour les phases de temps respectives dans la durée correspondant au seul tour de l'arbre (22) de rotation, déterminer qu'il faut faire fonctionner les chambres (25) de travail correspondant aux points de décision respectifs dans l'état actif ; et
si une partie des chambres (25) de travail a le défaut de fonctionnement, à seulement un point de décision effectif, qui est la pluralité de points de décision excluant : un point de décision correspondant à la phase de temps de va et vient du piston (26) de la chambre (25) de travail anormale et au moins un point de décision, qui n'est pas le point de décision correspondant à la chambre (25) de travail anormale, déterminer s'il faut faire fonctionner la chambre (25) de travail, correspondant au point de décision effectif, à l'état actif.

4. Machine (20) hydraulique suivant la revendication 3,
dans laquelle le point de décision effectif est la pluralité de points de décision excluant : le point de décision correspondant à la phase de temps de va et vient du piston (26) de la chambre (25) de travail anormale et un point de décision ayant une phase opposée à celle du point de décision correspondant à la chambre (25) de travail anormale en termes de temps.

5. Machine (20) hydraulique suivant la revendication 3,
dans lequel le point de décision effectif est la pluralité de points de décision excluant : le point de décision correspondant à la phase de temps de va et vient du piston (26) de la chambre (25) de travail anormale ; et deux points de décision, chacun d'entre eux variant d'un angle de phase de 120 degrés du point de décision correspondant à la chambre (25) de travail anormale.

6. Machine (20) hydraulique suivant l'une quelconque des revendications 3 à 5n
dans lequel l'unité (50) de commande est configurée pour :
si toutes les chambres (25) de travail sont normales, ajouter une valeur Fd d'instruction de fréquence active chaque fois qu'arrive l'un de la pluralité de points de décision, déterminer si une valeur cumulative des valeurs Fd d'instruction de fréquence active est une valeur de seuil ou plus à chacun des points de décision, et commuter l'état de la chambre (25) de travail correspondant à un point de décision, où la valeur cumulative est la valeur de seuil ou plus, à l'état actif ; et
si une partie des chambres (25) de travail a le défaut de fonctionnement, ajouter une valeur Fd d'instruction de fréquence active chaque fois qu'arrive l'un des points de décision effectifs, déterminer si une valeur cumulative des valeurs Fd d'instruction de fréquence active est une valeur de seuil ou plus à chacun des points de décision effectifs et commuter l'état de la chambre (25) de travail correspondant à un point de décision effectif, où la valeur cumulative est la valeur de seuil ou plus, à l'état actif.

7. Machine (20) hydraulique suivant la revendication 1 ou 2,
dans lequel l'unité (50) de commande est configurée pour :
si toutes les chambres (25) de travail sont normales, à une pluralité de points de décision, qui est fixée pour les phases de temps respectifs dans la durée correspondant au un seul tour de l'arbre (22) de rotation, déterminer s'il faut faire fonctionner les chambres (25) de travail correspondant aux points de décision respectifs, dans l'état actif dans la même condition de détermination ; et
si une partie des chambres (25) de travail a le défaut de fonctionnement, aux points de décision d'un premier groupe comprenant le point de décision correspondant à la phase de temps de va et vient du piston (26) de la chambre (25) de travail anormale, déterminer s'il faut faire fonctionner les chambres (25) de travail, correspondant aux points de décision respectifs du premier groupe, dans l'état actif dans une condition de détermination stricte par rapport aux points de décision d'un deuxième groupe, qui ne sont pas les points de décision du premier groupe.

8. Machine (20) hydraulique suivant la revendication 7,
dans laquelle l'unité (50) de commande est configurée pour :
si toutes les chambres (25) de travail sont normales, ajouter une valeur Fd d'instruction de fréquence active chaque fois qu'arrive l'un de la pluralité de points de décision, déterminer si une valeur cumulative des valeurs Fd d'instruction de fréquence active est une valeur de seuil commune ou plus à chacun des points de décision et commuter l'état de la chambre (25) de travail correspondant à un point de décision, où la valeur cumulative est la valeur de seuil commune ou plus, à l'état actif ; et
si une partie des chambres de travail a le défaut de fonctionnement, commuter l'état de la chambre (25) de travail correspondant à un point de décision du premier groupe, où la valeur cumulative est une première valeur de seuil ou plus, à l'état actif et commuter l'état de la chambre (25) de travail correspondant à un point de décision du deuxième groupe, où la valeur cumulative est une deuxième valeur de seuil ou plus, à l'état actif, la deuxième valeur de seuil étant plus petite que la première valeur de seuil.

9. Machine (20) hydraulique suivant l'une quelconque des revendications 1 à 8,
dans laquelle l'unité de commutation d'état comprend :
une soupape de haute pression pour commuter un état de communication entre une ligne (30) de haute pression et chacune des chambres (25) de travail ;
une soupape de basse pression pour commuter un état de communication entre une ligne (31) de basse pression et chacune des chambres (25) de travail ;
dans laquelle, pour la chambre (25) de travail dans l'état actif, la soupape de haute pression et la soupape de basse pression sont ouvertes et fermées en fonction de la phase de va et vient du piston (26), et
dans laquelle, pour la chambre (25) de travail dans l'état inactif, un état dans lequel la soupape de haute pression est fermée et la soupape de basse pression est ouverte est maintenu, quelle que soit la phase de va et vient du piston (26) .

10. Installation (1) de production d'électricité à énergie renouvelable, comprenant :
une roue (4), configurée pour être mise en rotation par de l'énergie renouvelable ;
une pompe (10) hydraulique, configurée pour être entraînée par la roue (4), afin de produire de l'huile sous pression ;
un moteur (20) hydraulique, configuré pour être entraîné par l'huile sous pression ; et
un générateur (8), configuré pour être entraîné par le moteur (20) hydraulique,
dans laquelle au moins l'un de la pompe (10) hydraulique ou du moteur (20) hydraulique comprend la machine hydraulique suivant l'une quelconque des revendications 1 à 9.

11. Procédé pour faire fonctionner une machine (20) hydraulique, qui comprend :
un arbre (22) de rotation ;
une pluralité de pistons (26), configurés pour aller et venir en une durée correspondant à un seul tour de l'arbre (22) de rotation, la pluralité de pistons (26) comprenant des pistons (26) allant et venant en même temps que la rotation de l'arbre (22) de rotation à des phases de temps de mouvement de va et vient variées entre les pistons (26) ;
une pluralité de cylindres (25), formant une pluralité de chambres (25) de travail avec la pluralité de pistons (26) ;
une unité de commutation d'état pour commuter un état de chacune des chambres (25) de travail entre un état actif, dans lequel de l'énergie est transformée entre de l'énergie de rotation de l'arbre (22) de rotation et de l'énergie de pression dans la chambre (25) de travail, et un état inactif, dans lequel l'énergie n'est pas transformée,
le procédé étant **caractérisé en ce qu'**il comprend
fixer un état d'au moins l'une de la pluralité de chambres (25) de travail à l'état inactif, la au moins une chambre (25) de travail correspondant à une phase de temps, qui est différente de la phase de temps de va et vient du piston (26) d'une chambre (25) de travail anormale ayant un défaut de fonctionnement, ou réduire une fréquence de commutation de l'état de la au moins une chambre (25) de travail à l'état actif.
